# EUROPÄISCHE PATENTSCHRIFT

(11) **EP 0 395 839 B1**
(45) Veröffentlichungstag und Bekanntmachung des Hinweises auf die Patenterteilung: **09.08.1995**
(21) Anmeldenummer: 90102163.4
(22) Anmeldetag: 03.02.1990
(51) Int. Cl.: G02B 6/44, G02B 6/22, G02B 6/20

(54) **Optische Ader**
Optical lead
Brin optique

(30) Priorität: 29.04.1989 DE 3914368
(43) Veröffentlichungstag der Anmeldung: 07.11.1990
(73) Patentinhaber: KABEL RHEYDT Aktiengesellschaft, D-41179 Mönchengladbach (DE)
(72) Erfinder: Hög, Georg, D-4050 Mönchengladbach 2 (DE); Hoffart, Michael, D-5628 Heiligenhaus (DE); Stankovic, Dragan, D-5100 Aachen (DE); Wichura, Dieter, D-5144 Wegberg 2 (DE); Zamzow, Peter, D-4630 Bochum (DE)
(74) Vertreter: Mende, Eberhard, Dipl.-Ing.

(56) Entgegenhaltungen:
- EP-A- 0 129 372
- EP-A- 0 155 070
- DE-A- 3 147 137
- DE-A- 3 219 455
- DE-B- 2 728 642
- PATENT ABSTRACTS OF JAPAN, Band 10, Nr. 266 (P-496), 11. September 1986 ; & JP-A-61 091 610

## Beschreibung

Die Erfindung betrifft eine optische Ader nach dem Oberbegriff des Anspruchs 1. Bei den bekannten optischen Adern ist die optische Faser entweder lose in einer Schutzhülle untergebracht, oder fest von einem Mantel umgeben, wodurch die sogenannte Festader entsteht.

Um die Dämpfung einer Lichtleitfaser oder optischen Faser bei den üblichen Betriebsbedingungen im optischen Kabel niedrig zu halten, sind an eine optische Ader bestimmte Forderungen zu stellen. Da die Überlänge der Lichtleitfaser in der optischen Hohlader einen bestimmten Wert nicht überschreiten soll und bei der Festader keine Überlänge existiert, muß sichergestellt werden, daß beim Biegen der optischen Ader keine übermäßigen Stauchungen oder Dehnungen auftreten. Die Temperaturausdehnung muß sich ebenfalls in gewissen Grenzen bewegen, damit bei Hohladern keine sogenannten "microbending-Effekte" auftreten.

Die Gefahr der übermäßigen Dehnung und sogar des Bruchs der optischen Faser ist bei einer fest umhüllten optischen Faser am größten. Infolgedessen wird die optische Faser meist von einer Polsterschicht umgeben, damit die Faser bei Biegungen in die Nähe der neutralen Zone ausweichen kann. In der neutralen Zone finden bei Biegungen keine Längenänderungen statt; lediglich Temperaturänderungen können in der neutralen Zone zu Längenänderungen der optischen Faser führen. Ein Beispeil für eine solche Festader ist in der Schrift "Patents Abstracts of Japan, Band 10, 1986, JP-A- 61- 091610" gegeben.

Unter einer Lichtleitfaser wird hier eine lichtführende Glasfaser verstanden, welche nach dem Ziehen aus einem Stab oder Rohr zumindest mit eine Schutzschicht bedeckt ist. Diese Schutzschicht hat die Aufgabe, Beschädigungen der Faser oder den direkten Kontakt der Faser mit Wasserdampf oder anderen schädigenden Medien zu schützen. Meist wird zur besseren Handhabung der optischen Faser eine weitere Schutzhülle aufgebracht. Diese Schutzhülle wird meist in Form eines dünnen Films aus einem Flüssigkeitsbad aufgebracht und durch UV-Bestrahlung ausgehärtet.

Es gibt für optische Hohladern zwei Ausführungsformen. Bei der einen ist das Innere der Hohlader mit einem Gas, beispielsweise Luft, gefüllt. In der anderen Ausführungsform wird die Hohlader als Schlauch um die Faser extrudiert und der verbleibende Hohlraum mit einer gelartigen Substanz ausgefüllt.

Bei den bisherigen Aderkonstruktionen stellte sich als nachteilig heraus, daß die Adern bei einer vorgegebenen Reißfestigkeit einen relativ großen Durchmesser haben müssen. Die Adern sind metallfrei und gegen eindringenden Wasserdampf empfindlich. Ein weiterer Nachteil besteht darin, daß die meisten Kunststoffe einen von Glas verschiedenen Ausdehnungskoeffizienten besaßen und bei Temperaturänderungen Kräfte von der Hülle auf die Faser übertragen werden. Um den Zug- und Stauchschutz der empfindlichen Glasfaser sicherzustellen, müssen separate Verstärkungselemente vorgesehen werden. Dafür kommen u. a. Aramide, wie z.B. Poly-(p-phenylenterephthalamide), welche als 'Kevlar' bekannt sind, infrage. Dieser Kunststoff ist nicht extrudierbar, was bei der Kabelfertigung einen erhöhten technischen Aufwand (Verseilmaschinen) bedeutet.

Der Erfindung liegt die Aufgabe zugrunde, eine optische Ader anzugeben, die bei geringem Durchmesser eine hohe Zugfestigkeit und ein geringes Durchdringungsvermögen für Wasserdampf bestitzt. Außerdem sollte die optische Ader aus einem Material bestehen, welches ein dem Quarzglas nahekommenden Temperaturausdehnungskoeffizienten besitzt.

Diese Aufgabe wird bei einer optischen Ader der eingangs erwähnten Art nach der Erfindung durch die im Kennzeichen des Anspruchs 1 aufgeführten Merkmale gelöst. Vorteilhafte Weiterbildungen der Erfindung sind in den Unteransprüchen beschrieben.

Die Erfindung eignet sich insbesondere zur Herstellung von optischen Adern, welche extremen Umweltbelastungen ausgesetzt sind. Einerseits ist die LCP-Aderhülle sehr schlagfest, vor allem durch die Schutzschicht, welche der Splitterneigung des LCP entgegenwirkt, andererseits besitzt die LCP-Hülle eine geringe Durchdringungsfähigkeit für Wasserdampf. In der Installationstechnik ist es daher möglich, der erfindungsgemäßen optischen Adern auch ohne zusätzliche metallische Schutzhülle zu verlegen.

Die Vorteile gegenüber dem Stand der Technik sind:
1. Bei der Extrusion kann die Orientierung der LCP-Moleküle so eingestellt werden, daß eine hohe Festigkeit bei geringer Dehnung gegeben ist.
2. Stauchschutz und Zugentlastung sind in die Ader integriert.
3. Die Adern können metallfrei aufgebaut werden wegen der Sperrwirkung des LCP gegen Wasserdampf.
4. Die Adern können in einem Temperaturbereich von minus 40 °C bis über 100 °C eingesetzt werden.
5. Zur besseren Aderidentifizierung ist die Schutzschicht leicht einfärbbar.
6. Der thermische Ausdehnungskoeffizient des LCP ist einstellbar, so daß er dem des Glases entspricht.

Ausführungsbeispiele der Erfindung werden nachstehend anhand der Zeichnung näher erläutert. Dabei zeigt jeweils in perspektivischer Darstellung:
Fig. 1 eine gefüllte Hohlader gemäß der Erfindung;
Fig. 2 eine Hohlader mit innenliegender Schutzschicht gemäß einer alternativen Ausführung;
Fig. 3 eine Festader mit Aufbau aus drei Schichten gemäß einer alternativen Ausführung, und
Fig. 4 eine Festader mit Aufbau aus zwei Schichten gemäß einer alternativen Ausführung.

Die sehr harte LCP-Hülle 2, welche um die Fasern 1 extrudiert wird, ist sehr spröde und erhält aus diesem Grunde eine Schutzschicht 3, welche der Splitterneigung des LCP entgegenwirkt. Die Schicht 3 kann sehr dünn sein, muß sich jedoch mit der darunterliegenden LCP-Hülle sehr innig verbinden. Vorzugsweise geschieht dies durch Koextrusion von LCP-Hülle und Schutzschicht; die also in einem Arbeitsgang hergestellt werden.

Diese Verbindung wird auch dadurch erzielt, daß die Schicht 3 auf das noch heiße LCP-Material aufextrudiert wird. Diese Schicht kann nach dem sogenannten Schlauchextrusionsverfahren hergestellt sein.

Der Durchmesser der Glasfaser mit der ersten Schutzschicht und eventuell weiteren Schutzschichten, beträgt etwa 0,25 mm. Der Innendurchmesser der LCP-Hülle 2 beträgt etwa 0,6 mm. Vorzugsweise ist die LCP-Schicht 0,2 bis 0,4 mm dick; die Stärke kann nach dem Anwendungsfall entsprechend gewählt werden.

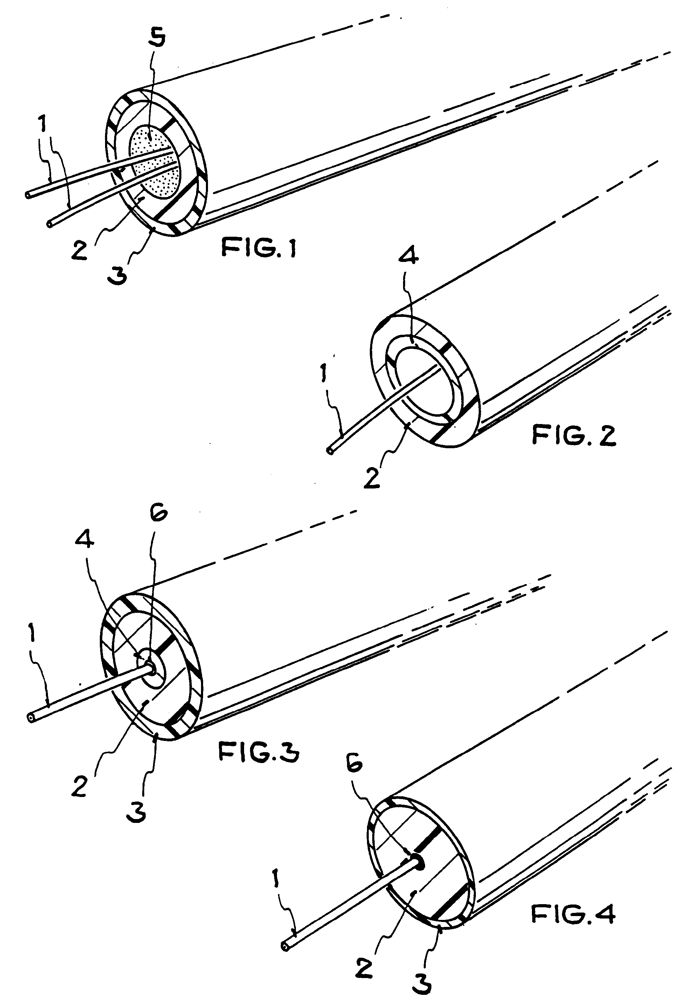

Die Schutzschicht 3 (siehe Fig. 1) sollte mindestens 0,1 mm betragen. Zweckmäßigerweise besteht die Schutzschicht aus einem sehr dehnbaren und auch reißfesten Material. Beispielsweise besteht die Schutzschicht 3 aus Polyamid. In einer mechanisch sehr günstigen Ausführungsform besteht die Schutzschicht 3 aus Polyester. In Fig. 1 ist die Hohlader mit einer gelartigen Masse 5 gefüllt. In einer solchen Hohlader können ein oder auch bis zu zehn und mehr optische Fasern untergebracht sein.

Figur 2 stellt eine Alternative zur Erfindung das; bei der dargestellten optischen Ader ist ein Lichtwellenleiter 1 mit Überlänge in einer Hohlader untergebracht. Die Umhüllung besteht aus einem Schlauch 4 aus Polyamid oder Polyester. Auf diesen Schlauch ist das LCP-Material direkt extrudiert, so daß eine innige Verbindung der beiden Mantelschichten erfolgt. Vorzugsweise ist die Stärke der inneren Schicht 4 kleiner oder gleich der Stärke der LCP-Schicht 2.

Figur 3 stellt eine Alternative zur Erfindung das; die dargestellte Festader besteht aus der mit einer Schutzschicht versehenen optischen Faser 1, welche von einer Gleitschicht 6 umgeben ist. Vorzugsweise ist die Gleitschicht eine Flüssigkeit, welche das spätere Abmanteln der äußeren Schichten erleichtert. Auf die Gleitschicht ist eine Schutzschicht oder Polsterschicht 4 aufextrudiert. Anschließend ist die LCP-Hülle 2 aufgebracht. Abschließend wird die LCP-Hülle 2 von einer äußeren Schutzschicht 3 umgeben. Die Schutzschicht 3 hat wieder die Aufgabe, die LCP-Hülle vor dem Auffasern bzw. Splittern zu schützen.

Falls die optischen Adern weniger stark gebogen werden und keinen extremen Temperaturschwankungen ausgesetzt sind, ist eine Konstruktion gemäß Fig. 4 vorzuziehen. Der mit einer Gleitschicht 6 versehene Lichtwellenleiter 1 ist von einem fest aufextrudierten Mantel 2 aus LCP umgeben. Die äußere Schutzschicht aus Polyamid oder Polyester wird durch Koextrusion gemeinsam mit dem LCP extrudiert, so daß sich die Schichten so fest verbinden, daß ein Aufsplittern der LCP-Hülle verhindert wird.

In einer weiteren Ausgestaltung der Erfindung, welche hier nicht bildlich dargestellt ist, ist die Schutzschicht 4 für die Festader lediglich innen vorgesehen. Diese Schutzschicht, beispielsweise aus Polyamid, verhindert zwar nicht die Rißbildung in der außenliegenden LCP-Hülle 2, jedoch bleibt der Aderverbund erhalten. Dies liegt daran, daß der Zusammenhalt der Hülle durch die innige Verbindung von LCP-Hülle 2 und Schutzschicht 4 gegeben ist.

## Patentansprüche

1. Optische Ader mit mehreren optischen Fasern (1) und einer alle Fasern umgebenden Hülle (2), innerhalb der die Fasern (1) lose angeordnet oder lose in eine Füllung eingebettet sind, dadurch gekennzeichnet, daß die Hülle (2) aus einem Liquid-Crystal-Polymer (LCP) besteht und ein- oder beidseitig von einer Schutzschicht (3, 4) aus einem Material mit gegenüber dem Liquid-Crystal-Polymer geringerer Härte, aber höherer Dehnbarkeit überdeckt ist.

2. Optische Ader nach Anspruch 1, dadurch gekennzeichnet, daß die Hülle mit einer gelartigen Masse (5) gefüllt ist.

3. Optische Ader nach Anspruch 1 oder 2, dadurch gekennzeichnet, daß die Schutzschicht (3, 4) aus Polyamid besteht.

4. Optische Ader nach einem der Ansprüche 1 bis 3, dadurch gekennzeichnet, daß die Schutzschicht (3, 4) aus Polyester besteht.

5. Optische Ader nach einem der Ansprüche 1 bis 4, dadurch gekennzeichnet, daß im Zentrum der Hülle ein optisches Faserbündel aus Fasern (1) angeordnet ist.

6. Optische Ader nach einem der Ansprüche 1 bis 5, dadurch gekennzeichnet, daß die Aderhülle (2) durch Extrusion hergestellt ist und mit der Schutzschicht (3, 4) fest verbunden ist.

7. Optische Ader nach einem der Ansprüche 1 bis 6, dadurch gekennzeichnet, daß der thermische Ausdehnungskoeffizient des Liquid-Crystal-Polymers derjenigen des Glases der Faser entspricht.

## Claims

1. Optical wire having a plurality of optical fibres (1) and a sleeve (2) surrounding all the fibres, inside which the fibres (1) are arranged loosely or are loosely embedded in a filling, characterized in that the sleeve (2) consists of a liquid-crystal polymer (LCP) and is covered on one or both sides by a protective layer (3, 4) made of a material with lower hardness but higher ductility than the liquid-crystal polymer.

2. Optical wire according to Claim 1, characterized in that the sleeve is filled with a gel-like compound (5).

3. Optical wire according to Claim 1 or 2, characterized in that the protective layer (3, 4) consists of polyamide.

4. Optical wire according to one of Claims 1 to 3, characterized in that the protective layer (3, 4) consists of polyester.

5. Optical wire according to one of Claims 1 to 4, characterized in that a bundle of optical fibres (1) is arranged in the centre of the sleeve.

6. Optical wire according to one of Claims 1 to 5, characterized in that the wire sleeve (2) is produced by means of extrusion and is firmly connected to the protective layer (3, 4).

7. Optical wire according to one of Claims 1 to 6, characterized in that the thermal expansion coefficient of the liquid-crystal polymer corresponds to that of the glass of the fibres.

## Revendications

1. Conducteur optique comportant plusieurs fibres optiques (1) et une gaine (2) qui entoure toutes les fibres à l'intérieur de laquelle les fibres (1) sont disposées sans serrage ou bien sont enrobées, sans serrage, dans un rembourrage, caractérisé par le fait que la gaine (2) est constituée d'un polymère cristal liquide (LCP) et qu'elle est recouverte, d'un côté ou des deux côtés, par une couche de protection (3, 4) en un matériau présentant, par rapport au polymère cristal liquide, une moindre dureté mais une ductilité plus élevée.

2. Conducteur optique selon la revendication 1, caractérisé par le fait que la gaine est remplie d'une masse de rembourrage (5) de type gel.

3. Conducteur optique selon la revendication 1 ou 2, caractérisé par le fait que la couche de protection (3, 4) est constituée d'un polyamide.

4. Conducteur optique selon l'une des revendications 1 à 3, caractérisé par le fait que la couche de protection (3, 4) est constituée d'un polyester.

5. Conducteur optique selon l'une des revendications 1 à 4, caractérisé par le fait qu'au centre de la gaine est disposé un faisceau de fibres optiques (1).

6. Conducteur optique selon l'une des revendications 1 à 5, caractérisé par le fait que la gaine (2) du conducteur est réalisée par extrusion et qu'elle est reliée à la couche de protection (3, 4) sans liberté relative.

7. Conducteur optique selon l'une des revendications 1 à 6, caractérisé par le fait que le coefficient de dilatation thermique du polymère cristal liquide correspond à celui du verre de la fibre.
